Europäisches Patentamt

European Patent Office

Office européen des brevets

(19)

(11) **EP 0 415 108 B1**

(12) **EUROPEAN PATENT SPECIFICATION**

(45) Date of publication and mention
of the grant of the patent:
**09.10.1996  Bulletin 1996/41**

(51) Int Cl.6: **H04L 7/033**, H04N 5/93

(21) Application number: **90114710.8**

(22) Date of filing: **31.07.1990**

(54) **Method of and apparatus for correcting the phase of a playback clock signal**

Verfahren und Vorrichtung zum Korrigieren der Phase eines Wiedergabetaktsignals

Procédé et dispositif pour corriger la phase d'un signal d'horloge reproduit

(84) Designated Contracting States:
**DE FR GB NL**

(30) Priority: **31.07.1989  JP  198882/89**

(43) Date of publication of application:
**06.03.1991  Bulletin 1991/10**

(73) Proprietor: **SONY CORPORATION**
**Tokyo (JP)**

(72) Inventors:
• **Kanota, Keiji**
  **Shinagawa-ku Tokyo (JP)**
• **Seki, Takahito**
  **Shinagawa-ku Tokyo (JP)**

(74) Representative:
**Schmidt-Evers, Jürgen, Dipl.-Ing. et al**
**Patentanwälte**
**Mitscherlich & Partner,**
**Postfach 33 06 09**
**80066 München (DE)**

(56) References cited:
**EP-A- 0 330 282**          **FR-A- 2 606 575**
**GB-A- 2 099 663**          **GB-A- 2 139 833**
**US-A- 4 627 080**

• **PATENT ABSTRACTS OF JAPAN vol. 009, no.**
  **023 (E-293)30 January 1985 &JP-A-59 171 230**
  **( MITSHUBISHI DENKI KK) 27 sept.1984**
• **IEEE TRANSACTIONS ON COMMUNICATIONS**
  **vol. 24, no. 5, May 1976, NEW YORK US pages**
  **516 - 531 K.H.MUELLER AND M.M]LLER 'Timing**
  **recovery in digital synchronous data receivers'**

## Description

The present invention relates generally to a phase correction apparatus. More particularly, the present invention relates to a phase correction apparatus which may preferably be employed in such as a video tape recorder, for example.

Conventionally, in VCRs a video signal is recorded on magnetic tape by modulating the frequency of the signal and passing the signal through a low pass filter. During a decoding, or playback operation the modulated frequencies must be restored to their original state in order to achieve a high-quality playback signal.

The FR-A-26 065 75 describes a method and apparatus for correcting a phase of a digital input signal by means of a parameter calculated from a counted code violation rate. A comparing circuit compares an input signal level with reference signal levels being adaptively controlled. The comparing results are fed to a violation detector which, upon detecting a code violation, outputs a pulse to a counter. After a counting time given by a separate programmable counter a processor calculates correction values for the phase and the reference signal values. At every controlling sequence the decoding is degraded. To prevent this separated signal and controlling paths are proposed of which the controlling path functions continuously.

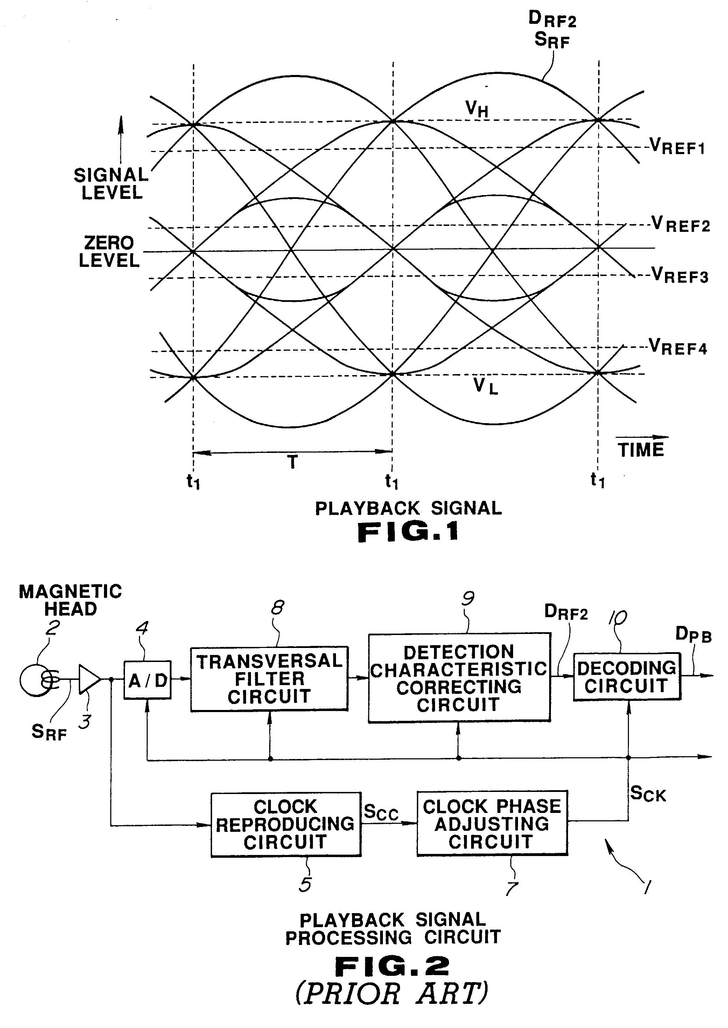

In view of this, a method of recording and reproducing video signals has been developed utilizing a partial response process which is a process of encoding digital signals with high efficiency. A well known partial response method is in wide use which is called a class IV partial response process. In a case where a signal is recorded using the above-mentions class IV process, a resulting signal having an eye pattern (image density) as shown in fig. 1 is produced.

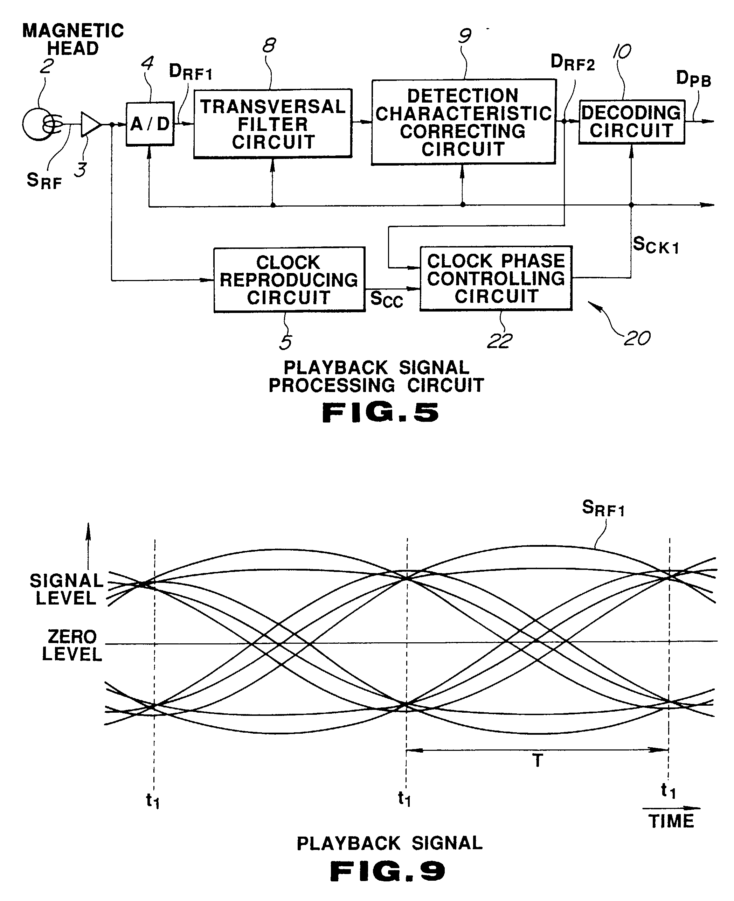

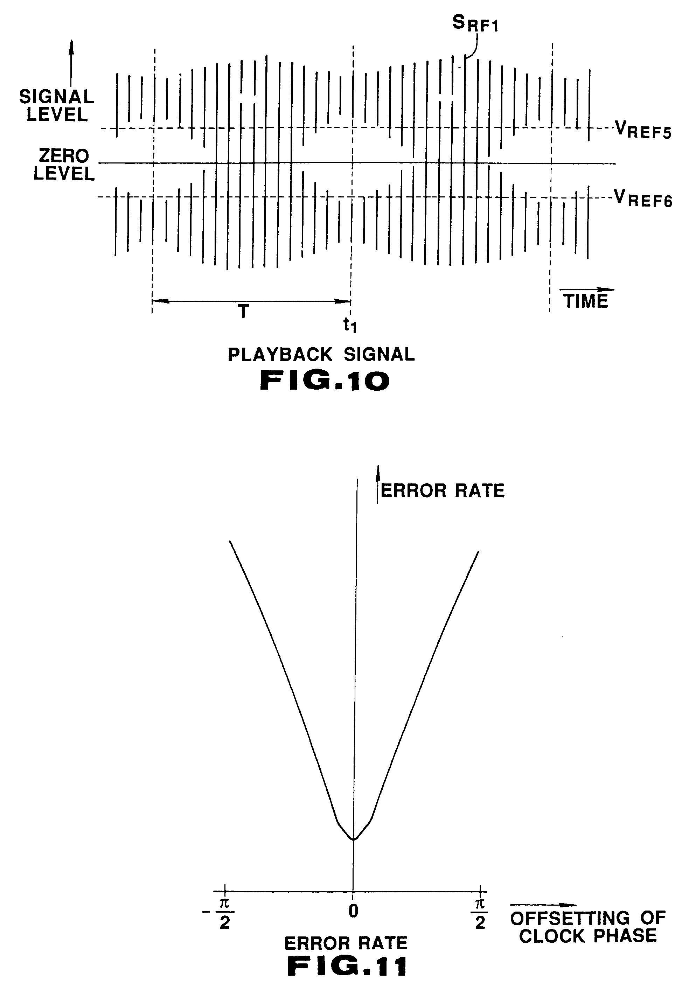

In order to clarify the disclosure, a conventional playback signal decoding process will be described hereinbelow with reference to Figs. 1-4. The signal is decoded for playback by a circuit such as shown in fig. 9. Basically, the signal to be played back is transmitted from a magnetic head 2 and is amplified by an amplifying circuit 3, this amplified playback signal is tranmitted to an A/D (analogue/digital) converter 4, and a clock reproducing circuit 5. The clock reproducing circuit 5 generally consists of a phase-locked loop (PLL) oscillating circuit in which a clock signal is generated and wherein a signal level of the clock signal peaks at a clock period T. Then, a clock phase adjusting circuit 7 arranged downstream of the clock reproducing circuit 5 receives the clock signal so that a playback clock signal is generated in the clock phase adjusting circuit 7 which is delayed from the clock signal by a period of time determined such that the signal level of the playback clock occurs, for example, at a time $t_1$, when the eye pattern (image density) of the video signal is at maximum.

Cooperatively with the above, in the A/D converter 4, the playback signal is converted into a digital signal at a timing when the playback clock signal reaches its maximum signal level and the resulting digital playback signal is output to a transversal filter circuit 8.

The transversal filter circuit 8 is a digital filter circuit adapted to be operated in synchronization with the playback clock signal so that a high band component of the digital playback signal, lost at the time of recording and modulation, is appropriately restored.

A characteristic detection/correction circuit 9 is provided downstream of the transversal filter circuit which is constituted by a digital filter, also adapted to be operated in synchronization with the playback clock signal so that differential characteristics of the electromagnetic conversion are compensated by eliminating code interference with the incoming video signal and to set the characteristics of the recording/reproducing system as a whole to coincide with those of the class IV partial response process.

A decoding circuit 10, downstream of the characteristic detection/correction circuit 9 comprises a comparator, again synchronized with the playback clock signal, such that when the digital playback signal rises and falls relative a predetermined reference level, a playback data signal output from the decoding circuit assumes a binary value of '1' corresponding with the digital playback signal to optimize the output quality of the playback.

It is considered, in digital recording and reproducing systems that data may be copied or transferred any number of times with out generation loss, or loss of data quality, however, a certain amount of error will occur which contributes to degradation of data quality. This error rate is related to the phase of the recording/playback clock relative the timing of the signal input from the magnetic heads.

Although the above-described circuit arrangement has hitherto been considered adequate for high-quality digital signal reproduction, conventional systems as described above suffer from the drawback that, as is apparent from figs. 10 and 11, and as stated above, occurence of error, in the playback data signal, increases rapidly when the phase of the playback clock signal varies in relation to the point $t_1$ at which the eye pattern of the video signal reaches a maximum value, since the original signal output from the magnetic head is bound to contain some noise component.

Therefore, there is a need for a system of carrying out continuous adjustment of the phase of the playback clock signal such that the peak of the signal coincides exactly with the maximum eye pattern (time point $t_1$).

Since signal transmission characteristics of a magnetic recording/reproducing apparatus vary every time one magnetic tape is exchanged for another, in a video tape recorder (VCR), the phase of a playback clock signal varies in relation to the material being reproduced and correct phase alignment cannot be assured. Accordingly in order to insure that video signals are recorded and reproduced at a high density and to produce playback data having a low rate of error, the previously described clock phase adjusting circuit 7 should finely and continuously be controlled such that the playback clock signal corresponds to the timing of the maximum eye pattern in the video signal.

The object of the present invention is to provide a phase correction method and apparatus in which the phase of the clock signal is continuously corrected in a very simple manner.

The object is solved by the features of claim 1 and claim 7 according to the method and the apparatus, respectively.

Further developments of the invention are defined by claims 2 to 6 and 8 to 10.

The present invention will be understood from the detailed description given hereinbelow and from the accompanying drawings of the preferred embodiments which are given for explanation and understanding only and are not intended to imply limitation to the invention.

Fig. 1 is a diagram which shows a plurality of signal waves (eye pattern) each illustrating a playback signal in a case where a class IV partial response process is utilized;
Fig. 2 is a block diagram which schematically shows a conventional playback signal processing circuit for decoding a playback signal;
Fig. 3 is a diagram which schematically shows the playback signal derived from the circuit in fig.2 , particularly illustrating the operation of the circuit;
Fig. 4 is a diagram which schematically shows a characteristic curve, particularly illustrating an error rate.
Fig. 5 is a block diagram which schematically shows a signal processing circuit in accordance with a preferred embodiment of the present invention;
Fig. 6 is a block diagram which shows the clock phase controlling circuit of fig. 1;
Figs. 7 and 8 represent signal waves particularly illustrating the operation of the circuit shown in figs. 5 and 6 respectively;
Fig. 9 and 10 respectively show playback signals in a case in which an integration type partial response process has been employed;
Fig. 11 is a graph showing a characteristic curve illustrating an error rate;

Hereinbelow, the present invention will be described in detail with reference to the accompanying drawings which illustrate the preferred embodiments thereof. In order to clearly disclose the functioning of the present invention an explanation of the class IV partial response process will be included in the description.

It will be noted that the circuits are described in terms of function and are not limited to any particular combination of electronic components but may be easily fabricated by a circuit designer according to principles well understood in the art.

Referring to fig. 5 in which elements corresponding to those in fig. 2 are represented by the same numeral, a playback signal processing circuit 20 is shown which is intended to record and reproduce digital video signals according to a class IV partial response process. Specifically, during a recording operation the circuit 20 records a digital signal by successively executing calculation of the following equation:

$$\left[ \frac{1}{1 - D^2} \right] \quad \text{MOD} \ 2 \qquad \text{---}(1)$$

MOD 2 designates a remainder divided by 2 and D designates a delay operator.

With respect to electromagnetic conversion, the input signal $S_{RF}$ is represented by (1 - D) in response to the recording signal, since the electromagnetic conversion has differential characteristics.

Therefore, when in a reproducing mode, the characteristic detection/correction circuit 9 executes calculations of (1 + D) in response to the digital recording signal $D_{RF1}$ which has been corrected in the transversal filter circuit 8, whereby the whole apparatus additionally carries out correction and electromagnetic conversion in response to the input digital signal during a recording operation in accordance with the following equation.

$$(1 - D) \cdot (1 + D) = 1 - D^2 \qquad (2)$$

Thus the sets a signal transmission function to a value of 1, whereby the phase correction apparatus allows recording of digital video signals at a high density by effectively utilizing a frequency band of the electromagnetic system.

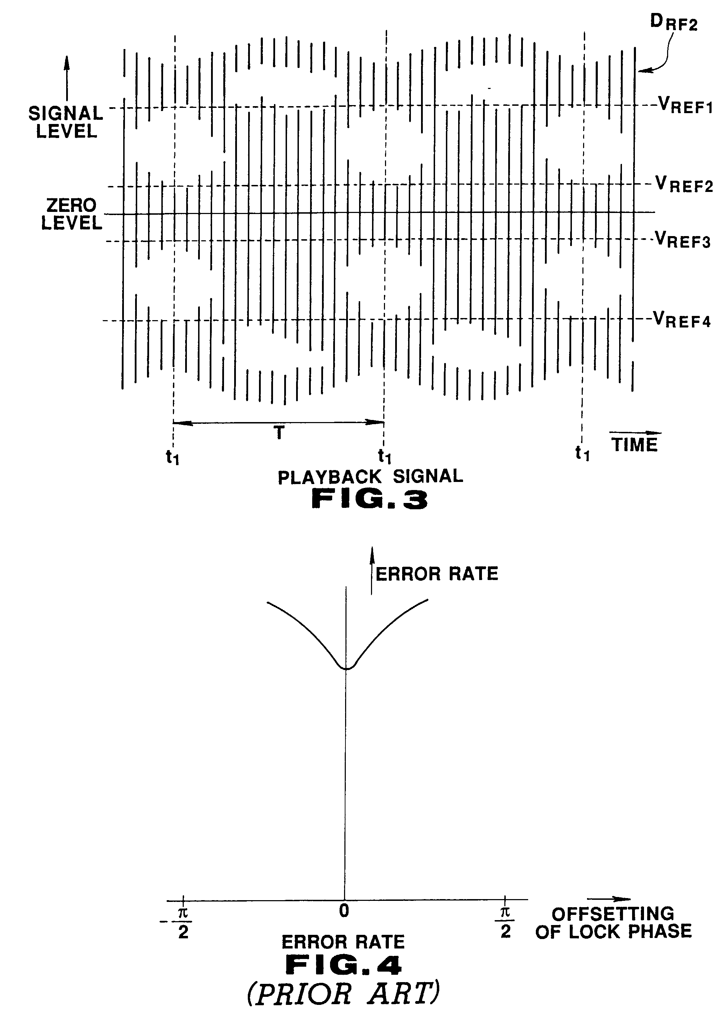

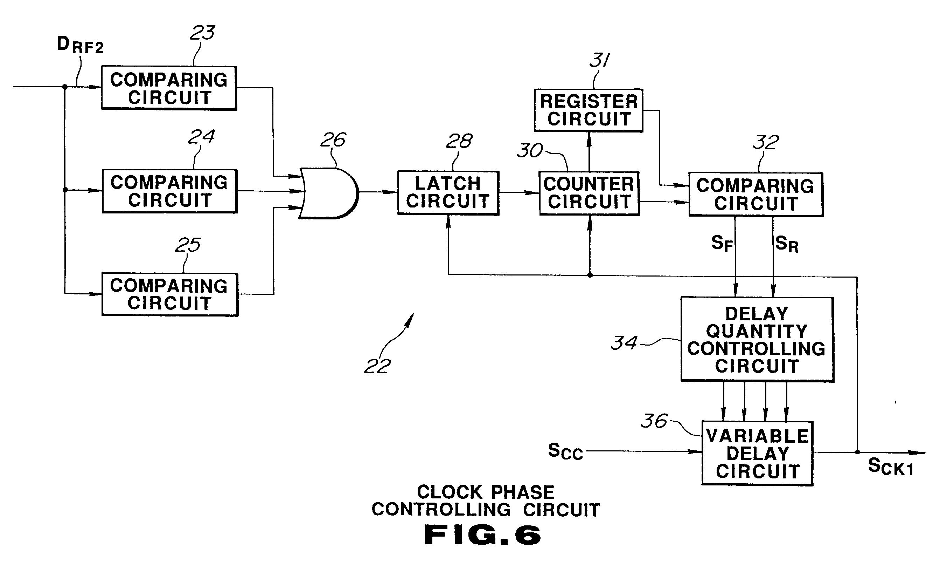

According to the invention, as shown in fig. 6, the characteristic detection/correction circuit 9 transmits an identification point signal $D_{RF2}$ representing the level of the input signal $S_{RF}$ to the comparators 23, 24, and 25 of the clock phase controlling circuit 22. when the level (amplitude) of the identification point signal $D_{RF2}$ exceeds a predetermined reference level $V_{REF1}$ (see fig. 3) the comparator 23 is activated to output a logic '1' representing a comparison result. In contrast with the above, when the present signal remains in a range defined by the reference levels $V_{REF2}$ and $V_{REF3}$, the comparator 24 is activated to output a logic '1' as the comparison result. In addition, should the identification point signal $D_{RF2}$ go below a forth reference level $V_{REF4}$, the comparator 25 is activated to output a logic '1' as the comparison result.

It will be noted that the reference level $V_{REF2}$ is set to a positive (+) side of a zero level and $V_{REF3}$ is set equally to a negative (-) side of the zero level to an extent corresponding to a level of noise included in the input signal $S_{RF}$. The reference level $V_{REF1}$ is selectively set to a level which is lower by the noise level than a signal level $V_H$ (fig. 1) which the input signal $S_{RF}$ rises above at a time $T_1$, whereas the reference level $V_{REF4}$ is selectively set to a level which is higher by the noise level than a signal level $V_L$ at which the input signal $S_{RF}$ falls below at a time point $t_1$. In other words, the reference levels serve to isolate the range of signal levels containing the highest noise component.

In this manner, the input signal $S_{RF}$ is converted into the digital identification point signal $D_{RF2}$ at the timing of the playback clock signal $S_{CK1}$. Thus, as shown in fig. 3, in a case where the pulses of the playback clock signal $S_{CK1}$ fall at the timing $t_1$ when the eye pattern of the input signal $S_{RF}$ is maximum (signal levels converge in the reference level ranges exhibiting the least noise), the identification point signal $D_{RF2}$ can be obtained in such a manner that it is concentratively distributed higher than the reference level $V_{REF1}$, within the range between the reference levels $V_{REF2}$ and $V_{REF3}$ and lower than the reference level $V_{REF4}$.

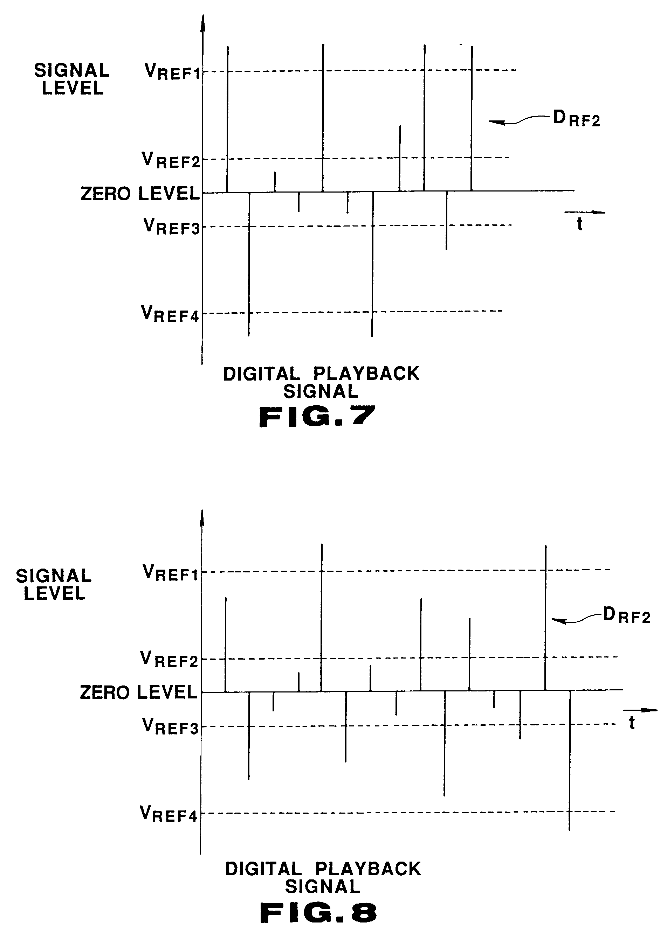

To the contrary, as shown in fig. 8, if the timing of the pulses of the playback clock signal $S_{CK1}$ is offset from the time point $t_1$, the obtained identification point signal $D_{RF2}$ more of the obtained signal is distributed in a range between the reference levels $V_{REF1}$ and $V_{REF2}$ and between reference levels $V_{REF3}$ and $V_{REF4}$, the concentration of this distribution increasing in correspondence to the extent of the offset thereby increasing the noise component of the recorded signal.

Next, an OR circuit 26 receives the comparisong results derived from the comparing circuits 23 to 25 based on a phase control principle so that the OR 26 output goes to a latch circuit 28 operating in synchonization with the playback clock signal $S_{CK1}$.

A counter 30 counts comparison results in the form of logic '1's which have been input via the latch circuit 28 and outputs the count value obtained to a register 31 and a further comparator 32.

According to this operation, in a case where the playback clock signal $S_{CK1}$ is output at a timing corresponding the time point $t_1$ when the eye pattern is at maximum, a large count value is obtained. On the other hand, if the playback clock signal $S_{CK1}$ is output at a timing offset from the time point $t_1$ the count value will be reduced according to the extent of the offset. As mentioned above, the counter 30 outputs results derived from the counting operation to the register 31 and the comparator 32 at intervals of several seconds and moreover causes the count value to be initialized to zero after each count has been calculated.

The register 31 is continuously activated to maintain the result derived from the counter 30. If a new count value is output from the counter, the register 31 outputs the previous count value to the comparator 32 and thereafter it maintains the newly received count value until is is subsequently replaced by a new value from the counter 30. Thus, the count value derived from the immediate counting operation is input to the comparator 32 from the counter 30 and concurrently, the count value of the previous counting operation is also input to the comparator 32 from the register 31.

In this manner, the present signal level of the input signal is compared with the reference levels $V_{REF1}$ to $V_{REF4}$ at the timing of the playback clock signal $S_{CK1}$. This makes it possible to detect whether the present phase of the playback clock signal comes near to or departs from the timing of the time point $t_1$ when the eye pattern is at maximum and signal quality is highest.

At this time, when the present and previous count values have been input to the comparator 32, the comparator 32 outputs a forward or reverse signal to a delay quantity control circuit 34 based on whether the count value is becoming closer to an optimal clock phase timing or farther from from an optimal clock phase timing.

In detail, when the following inequality is established on the assumption that the count value derived from the counter circuit 30 during the preceding counting operation is represented by $D_i$ and the count value derived from the counter circuit 30 during the present countion operation is represent by $D_{i+1}$, the reverse control signal $S_R$ is output from the comparator 32.

$$D_i - D_{i+1} < D \text{ offset} \qquad (3)$$

On the other hand when the inequality below is established, the forward control signal $S_F$ is output from the comparator 32.

$$D_i - D_{i+1} > D \text{ offset} \qquad (4)$$

Next, the delay quantity control circuit 34, upon receiving the $S_R$ or $S_F$ signal from the comparator 32, controls a variable delay circuit 36 such that the phase of the playback clock signal $S_{CK1}$ is variable controlled in reponse to a clock signal $S_{CC}$ input to the variable delay circuit from the clock reproducing circuit 5 (fig. 5). This arrangement of the delay quantity controlling circuit 34 assures that the pulses of the playback signal $S_{CK1}$ coincide with the interval of the time point $t_1$ at which the eye pattern is maximum.

When a video recorder (not shown) starts its reproducing operation, the delay quantity control circuit 34 provides a predetermined reference delay time via the delay circuit 36 for a predetermined period of time.

In a case where neither the reverse control signal $S_R$ or the forward signal $S_F$ are input into the variable delay circuit 36, the delay quantity control circuit 34 maintains its reference delay time, however, when the forward control signal $S_F$ is received, the delay time is further lengthened, or if the reverse signal $S_R$ is received, the delay time is shortened.

In this way the phase of the playback clock signal $S_{CK1}$ is continuously maintained such that the identification point signal $D_{RF2}$ is concentratively distributed higher than $V_{REF1}$ and between $V_{REF2}$ and $V_{REF3}$ (in the vicinity of the zero level), and below $V_{REF4}$ whereby the highest signal quality (lowest error rate) can be assured.

Additionally, the input signal $S_{RF}$ is converted into a digital signal at a timing according to the playback clock signal $S_{CK1}$ at the A/D converter 4 and the resultant digital playback signal $D_{RF}$ is properly corrected in the transverse filter circuit 8 and the characteristic detection/correction circuit 9.

Therefore, for example, even in a case where the magnetic tape is exchanged with another one, thereby changing the signal transmission characteristics, the phase of the playback clock signal can always be maintained at the lowest rate of error. Consequently, playback data $D_{PB}$ of low error can be obtained from the encoding circuit 10 by recording and reproducing digital video signals at high density.

## ALTERNATIVE EMBODIMENTS

The present invention has been described in terms of the preferred embodiment thereof, however, it may alternatively be embodied in other ways without departing from the principal of the invention. For example, the signal density in the previously described embodiment is concentrated in three ranges; above $V_{REF1}$, between $V_{REF2}$ and $V_{REF3}$ and below $V_{REF4}$, however the invention may alternatively be embodied such that the signal density is concentrated in another way, for example only levels above $V_{REF1}$ and below $V_{REF4}$ may be selected as the ranges of the signal concentration.

In addition, according to the embodiment, the delay time is controlled such that a count value is increased, thus reducing the phase error. However, if the point identification signal $D_{RF2}$ is alternatively distributed in a range between $V_{REF1}$ and $V_{REF2}$, and between $V_{REF3}$ and $V_{REF4}$, the delay time may alternatively be controlled such that a count value is reduced.

Additionally, although the invention has been described in terms of the class IV partial response process, it need not be limited to this process. The invention may also be preferrably applied to any one of various digital recording/reproducing processes, such as an integration type search process or the like. For example, in a case where an integration type search process is utilized, as shown in figs. 9 to 11, an eye pattern, the center of which is located at a zero level, can be obtained in response to an input signal $S_{RF1}$ generated by the magnetic head. In this case the error rate varies in correspondence to variation of the phase of the playback clock signal $S_{CK1}$ in the same manner as in the class IV process, therefore, in this case, the playback clock signal $S_{CK1}$ can be held to a low phase error rate by controlling the phase of the signal $S_{CK1}$ such that the identification point signal $D_{RF2}$ is concentratively distributed with a range higher than a reference level $V_{REF5}$, and lower than a reference level $V_{REF6}$ (see Fig. 10) the reference levels $V_{REF5}$ and $V_{REF6}$ being determined depending on the contour of the eye pattern from the magnetic head signal $S_{RF1}$.

Finally, though the invention has been described in terms of a case where digital video signals are reproduced, the processing apparatus of the present invention may be widely employed in cases where, for example, various types of digital signals are recorded, reproduced or transmitted. In the embodiment, although the signal $S_{CK1}$ is referred to as a playback clock signal, this signal may also be utilized in the recording and/or transmitting of an input signal.

## Claims

1. A method for correcting the phase of a playback clock signal (Sckl) relative to an input signal (Srf) having an eye-pattern, comprising the steps of:

generating a clock signal (Scc) in synchronisation with said input signal (Srf);
variably delaying said clock signal (Scc) according to a control signal to provide said playback clock signal (Sck1);
deriving an identification signal (Drf2) from said input signal (Srf);
comparing the level of said identification signal with at least two predetermined reference signal levels (Vref1-Vref4), thereby providing a comparison result at times determined by said playback clock (Sck1);
counting logic pulses derived from said comparison result during each one of consecutive counting time intervals of predetermined duration, thereby providing a respective count value at the end of each of said consecutive time intervals;
memorising said count value;
controlling the variable delaying of said clock signal (Scc) in accordance with said control signal so that pulses of said playback clock signal (Sckl) occur at times when said eye-pattern of said input signal reaches its maximum value;

characterised by

deriving one of said logic pulses whenever said comparison result provided at times determined by said playback clock (Sckl) indicates the level of said identification signal (Drf2) to be in a range defined by said reference signal levels (Vrefl-Vref4);
comparing the count values obtained at the end of two consecutive counting time intervals and determining a comparison value (Sr,Sf) therefrom;
determining said control signal according to said comparison value (Sr,Sf).

2. A method as set forth in claim 1, characterized by counting the logic pulses derived from said comparison results according to the playback clock signal (Sck1).

3. A method as set forth in claim 1 or 2, characterized by comparing the levels of said identification signal (Drf2) to the levels of a plurality of different predetermined reference signals.

4. A method as set forth in anyone of claims 1 to 3, characterized in that said input signal (Srf) is a video signal.

5. A method as set forth in anyone of claims 1 to 4, characterized in that said method is utilized in a class IV partial response process.

6. A method as set forth in anyone of claims 1 to 4, characterized in that said method is utilized in an integration type digital process.

7. A playback clock phase correction apparatus for an input signal (Srf) having an eye-pattern, comprising:

clock signal generating means (5) for receiving said input signal and generating a clock signal (Scc) in synchronisation with said input signal (Srf);
clock signal delaying means (36) for variably delaying said clock signal and providing therefrom a playback clock signal (Sck1), said clock signal delaying means being controlled by a control signal;
means (4,8,9) for deriving an identification signal (Drf2) from said input signal (Srf);
signal level comparing means (23,24,25,28) for comparing the level of said identification signal (Drf2) with at least two predetermined reference signal levels (Vref1-Vref4), and providing a comparison result at times determined by said playback clock signal (Sckl);
counter means (30) for counting logic pulses derived from said signal level comparing means during each one of consecutive counting time intervals of predetermined duration, and for outputting a latest count value at the end of each of said consecutive time intervals;
memory means (31) for inputting said latest count value outputted by said counter means, and holding it as a stored count value;
control means (34) for outputting said control signal thereby controlling said clock signal delaying means;

characterised by

means (26) for deriving a logic pulse whenever said comparison result provided at times determined by said playback clock (Sck1) indicates the level of said identification signal (Drf2) to be in a range defined by said reference signal levels;
count value comparing means (32) for comparing said stored count value hold in said memory means with the latest count value outputted by said counter means, and determining a comparison value (Sr,Sf) therefrom; and in that said control means determines said control signal according to said comparison value (Sr,Sf).

8. An apparatus as set forth in claim 7, characterized in that said comparing means (23, 24, 25, 28) comprises a plurality of comparing means (23, 24, 25) comparing said identification signal (Drf2) to a plurality of predetermined reference signal levels.

9. An apparatus as set forth in claim 7 or 8, characterized in that said apparatus utilizes a class IV partial response digital process.

10. An apparatus as set forth in anyone of claims 7 to 9, characterized in that said apparatus utilizes an integration type digital process.

**Patentansprüche**

1. Verfahren zur Korrektur der Phase eines Wiedergabetaktsignales (Sck1) relativ zu einem Eingangssignal (Srf) mit einem Augendiagramm, aufweisend die Schritte:

Erzeugung eines Taktsignales (Scc) in Synchronisation mit dem Eingangssignal (Srf);

variable Verzögerung des Taktsignales (Scc) gemäß einem Steuersignal, um das Wiedergabetaktsignal (Sck1) zu erzeugen;

Ableitung eines Identifikationssignales (Drf2) aus dem Eingangssignal (Srf);

Vergleich des Pegels des Identifikationssignales mit wenigstens zwei festgelegten Referenzsignalpegeln (Vref1-Vref4), wodurch ein Vergleichsresultat zu Zeitpunkten geliefert wird, die durch den Wiedergabetakt (Sck1) bestimmt sind;

Zählen der von dem Vergleichsresultat während jedes von aufeinanderfolgenden Zählzeitintervallen einer festgelegten Dauer abgeleiteten Logikpulsen, wodurch ein jeweiliger Zählwert am Ende jedes der aufeinanderfolgenden Zeitintervalle geliefert wird;

Abspeichern des Zählwertes;

Steuerung der variablen Verzögerung des Taktsignales (Scc) in Übereinstimmung mit dem Steuersignal derart, daß Pulse des Wiedergabetaktsignales (Sckl) zu Zeitpunkten auftreten, wenn das Augendiagramm des Eingangssignales seinen Maximalwert erreicht;

**gekennzeichnet durch**

Ableitung eines der Logikpulse immer dann, wenn das zu durch den Wiedergabetakt (Sck1) bestimmten Zeitpunkten gelieferte Vergleichsresultat den Pegel des Identifikationssignales (Drf2) in einem durch die Referenzsignalpegel (Vref1-Vref4) definierten Bereich angibt;

Vergleich der am Ende von zwei aufeinanderfolgenden Zählzeitintervallen erhaltenen Zählwerte und Bestimmung eines Vergleichswertes (Sr, Sf) aus diesem;

Bestimmung des Steuersignales entsprechend dem Vergleichswert (Sr, Sf).

2. Verfahren gemäß Anspruch 1,
**dadurch gekennzeichnet**,
daß die durch Vergleichsresultate entsprechend dem Wiedergabetaktsignal (Sckl) abgeleiteten Logikpulse gezählt werden.

3. Verfahren gemäß Anspruch 1 oder 2,
**dadurch gekennzeichnet**,
daß die Pegel des Identifikationssignales (Drf2) mit den Pegeln mehrerer verschiedener Referenzsignale verglichen werden.

4. Verfahren gemäß einem der Ansprüche 1 bis 3,
**dadurch gekennzeichnet**,
daß das Eingangssignal (Srf) ein Videosignal ist.

5. Verfahren gemäß einem der Ansprüche 1 bis 4,
**dadurch gekennzeichnet**,
daß das Verfahren in einem Klasse-IV-Partial-Response-Verfahren verwendet wird.

6. Verfahren gemäß einem der Ansprüche 1 bis 4,
**dadurch gekennzeichnet**,
daß das Verfahren in einem Integrationstyp-Digitalverfahren verwendet wird.

7. Wiedergabetakt-Phasenkorrekturvorrichtung für ein Eingangssignal (Srf) mit einem Augendiagramm, aufweisend:

eine Taktsignal-Erzeugungseinrichtung (5) zum Empfang des Eingangssignales und Erzeugung eines Taktsignales (Scc) in Synchronisation mit dem Eingangssignal (Srf);

eine Taktsignal-Verzögerungseinrichtung (36) zur variablen Verzögerung des Taktsignales und Erzeugung eines Wiedergabetaktsignales (Sck1) daraus, wobei die Taktsignal-Verzögerungseinrichtung durch ein Steuersignal gesteuert wird;

eine Einrichtung (4, 8, 9) zur Ableitung eines Identifikationssignales (Drf2) aus dem Eingangssignal (Srf);

eine Signalpegel-Vergleichseinrichtung (23, 24, 25, 28) zum Vergleichen der Pegel des Identifikationssignales (Drf2) mit wenigstens zwei festgelegten Referenzsignalpegeln (Vref1-Vref4), und um ein Vergleichsresultat zu Zeitpunkten zu liefern, die durch das Wiedergabetaktsignal (Sckl) bestimmt werden;

eine Zähleinrichtung (30) zum Zählen von Logikpulsen, die von der Signalpegel-Vergleichseinrichtung während jedes von aufeinanderfolgenden Zählzeitintervallen einer festgelegten Länge abgeleitet werden, und um einen letzten Zählwert am Ende jedes der aufeinanderfolgenden Zeitintervalle auszugeben;

eine Speichereinrichtung (31) zum Empfang des letzten von der Zähleinrichtung ausgegebenen Zählwertes und zum Halten dieses als gespeicherten Zählwert;

eine Steuereinrichtung (34) zur Ausgabe des Steuersignales, wodurch die Taktsignal-Verzögerungseinrichtung gesteuert wird;

**gekennzeichnet durch**

eine Einrichtung (26) zur Ableitung eines Logikpulses immer dann, wenn das zu durch den Wiedergabetakt (Sck1) bestimmten Zeitpunkten gelieferte Vergleichsergebnis angibt, daß der Pegel des Identifikationssignales (Drf2) in einem durch die Referenzsignalpegel definierten Bereich ist;

eine Zählwert-Vergleichseinrichtung (32) zum Vergleich des in der Speichereinrichtung gehaltenen gespeicherten Zählwertes mit dem letzten durch die Zähleinrichtung ausgegebenen Zählwert und zur Bestimmung eines Vergleichswertes (Sr, Sf) daraus; und dadurch, daß

die Steuereinrichtung das Steuersignal entsprechend dem Vergleichswert (Sr, Sf) bestimmt.

8. Vorrichtung gemäß Anspruch 7,
**dadurch gekennzeichnet,**
daß die Vergleichseinrichtung (23, 24, 25, 28) mehrere Vergleichseinrichtungen (23, 24, 25) zum Vergleich des Identifikationssignales (Drf2) mit mehreren festgelegten Referenzsignalpegeln aufweist.

9. Vorrichtung gemäß Anspruch 7 oder 8,
**dadurch gekennzeichnet,**
daß die Vorrichtung ein Klasse-IV-Partial-Response-Digitalverfahren verwendet.

10. Verfahren gemäß einem der Ansprüche 7 bis 9,
**dadurch gekennzeichnet,**
daß die Vorrichtung ein Integrationstyp-Digitalverfahren verwendet.

**Revendications**

1. Procédé de correction de la phase d'un signal d'horloge de lecture (Sck1) par rapport à un signal d'entrée (Srf) présentant un motif en oeil, comprenant les étapes de :

génération d'un signal d'horloge (Scc) en synchronisation avec ledit signal d'entrée (Srf)
retardement de façon variable dudit signal d'horloge (Scc) conformément à un signal de commande afin de produire ledit signal d'horloge de lecture (Sck1) ;
dérivation d'un signal d'identification (Drf2) à partir dudit signal d'entrée (Srf) ;
comparaison du niveau dudit signal d'identification avec au moins deux niveaux de signal de référence prédéterminés (Vref1-Vref4) pour ainsi produire un résultat de comparaison à des instants déterminés par ladite horloge de lecture (Sck1) ;
comptage d'impulsions logiques dérivées à partir dudit résultat de comparaison pendant chacun d'intervalles temporels de comptage consécutifs d'une durée prédéterminée pour ainsi produire une valeur de comptage respective à la fin de chacun desdits intervalles temporels consécutifs ;
mémorisation de ladite valeur de comptage ;
commande du retardement variable dudit signal d'horloge (Scc) conformément audit signal de commande de telle sorte que des impulsions dudit signal d'horloge de lecture (Sck1) se produisent à des instants où ledit motif en oeil dudit signal d'entrée atteint sa valeur maximum,

caractérisé par :

la dérivation de l'une desdites impulsions logiques chaque fois que ledit résultat de comparaison produit à des instants déterminés par ladite horloge de lecture (Sck1) indique que le niveau dudit signal d'identification (Drf2) doit être dans une plage définie par lesdits niveaux de signal de référence (Vref1-Vref4) ;
comparaison des valeurs de comptage obtenues à la fin de deux intervalles temporels de comptage consécutifs et détermination à partir de cette comparaison d'une valeur de comparaison (Sr, Sf) ;
détermination dudit signal de commande conformément à ladite valeur de comparaison (Sr, Sf).

2. Procédé selon la revendication 1, caractérisé par le comptage des impulsions logiques dérivées à partir desdits résultats de comparaison conformément au signal d'horloge de lecture (Sck1).

3. Procédé selon la revendication 1 ou 2, caractérisé par la comparaison des niveaux dudit signal d'identification (Drf2) avec les niveaux d'une pluralité de signaux de référence prédéterminés différents.

4. Procédé selon l'une quelconque des revendications 1 à 3, caractérisé en ce que ledit signal d'entrée (Srf) est un signal vidéo.

5. Procédé selon l'une quelconque des revendications 1 à 4, caractérisé en ce que ledit procédé est utilisé lors d'un processus de réponse partielle de classe IV.

6. Procédé selon l'une quelconque des revendications 1 à 4, caractérisé en ce que ledit procédé est utilisé lors d'un processus numérique du type intégration.

7. Appareil de correction de phase d'horloge de lecture pour un signal d'entrée (Srf) présentant un motif en oeil, comprenant :

un moyen de génération de signal d'horloge (5) pour recevoir ledit signal d'entrée et pour générer un signal d'horloge (Scc) en synchronisation avec ledit signal d'entrée (Srf)
un moyen de retardement de signal d'horloge (36) pour retarder de façon variable ledit signal d'horloge et pour produire à partir de celui-ci un signal d'horloge de lecture (Sck1), ledit moyen de retardement de signal d'horloge étant commandé par un signal de commande ;

un moyen (4, 8, 9) pour dériver un signal d'identification (Drf2) à partir dudit signal d'entrée (Srf) ; de signal (23, 24, 25,

un moyen de comparaison de niveau de signal (23, 24, 25, 28) pour comparer le niveau dudit signal d'identification (Drf2) avec au moins deux niveaux de signal de référence prédéterminés (Vref1-Vref4) et pour produire un résultat de comparaison à des instants déterminés par ledit signal d'horloge de lecture (Sck1) ;

un moyen de compteur (30) pour compter des impulsions logiques dérivées à partir dudit moyen de comparaison de niveau de signal pendant chacun d'intervalles temporels de comptage consécutifs d'une durée prédéterminée et pour émettre en sortie une dernière valeur de comptage à la fin de chacun desdits intervalles temporels consécutifs ;

un moyen de mémoire (31) pour entrer ladite dernière valeur de comptage émise en sortie par ledit moyen de compteur et pour la bloquer en tant que valeur de comptage stockée ;

un moyen de commande (34) pour émettre en sortie ledit signal de commande pour ainsi commander ledit moyen de retardement de signal d'horloge,

caractérisé par :

un moyen (26) pour dériver une impulsion logique chaque fois que ledit résultat de comparaison produit à des instants déterminés par ladite horloge de lecture (Sck1) indique que le niveau dudit signal d'identification (Drf2) doit être dans une plage définie par lesdits niveaux de signal de référence ;

un moyen de comparaison de valeur de comptage (32) pour comparer ladite valeur de comptage stockée bloquée dans ledit moyen de mémoire avec la dernière valeur de comptage émise en sortie par ledit moyen de compteur et pour déterminer à partir de celle-ci une valeur de comparaison (Sr, Sf) et en ce que

ledit moyen de commande détermine ledit signal de commande conformément à ladite valeur de comparaison (Sr, Sf).

8. Appareil selon la revendication 7, caractérisé en ce que ledit moyen de comparaison (23, 24, 25, 28) comprend une pluralité de moyens de comparaison (23, 24, 25) qui comparent ledit signal d'identification (Drf2) à une pluralité de niveaux de signal de référence prédéterminés.

9. Appareil selon la revendication 7 ou 8, caractérisé en ce que ledit appareil utilise un processus numérique de réponse partielle de classe IV.

10. Appareil selon l'une quelconque des revendications 7 à 9, caractérisé en ce que ledit appareil utilise un processus numérique du type intégration.

$D_{RF2}$
$S_{RF}$

$V_H$

- - - - - $V_{REF1}$

SIGNAL
LEVEL

- - - - - $V_{REF2}$

ZERO
LEVEL

- - - - - $V_{REF3}$

- - - - - $V_{REF4}$

$V_L$

$\overrightarrow{TIME}$

T

$t_1$                $t_1$                $t_1$

PLAYBACK SIGNAL
# FIG.1

MAGNETIC
HEAD
2

4        8                    9                $D_{RF2}$    10        $D_{PB}$

| | TRANSVERSAL FILTER CIRCUIT | DETECTION CHARACTERISTIC CORRECTING CIRCUIT | DECODING CIRCUIT |

$S_{RF}$    3    A/D

$S_{CK}$

| CLOCK REPRODUCING CIRCUIT | $S_{CC}$ | CLOCK PHASE ADJUSTING CIRCUIT |

5                        7                        1

PLAYBACK SIGNAL
PROCESSING CIRCUIT

# FIG.2
## (PRIOR ART)

$D_{RF2}$

SIGNAL
LEVEL

$V_{REF1}$

$V_{REF2}$

ZERO
LEVEL

$V_{REF3}$

$V_{REF4}$

T

$t_1$       $t_1$       $t_1$       $\overrightarrow{\text{TIME}}$

PLAYBACK SIGNAL
# FIG.3

ERROR RATE

$-\dfrac{\pi}{2}$       0       $\dfrac{\pi}{2}$       $\overrightarrow{\text{OFFSETTING}}$
OF LOCK PHASE

ERROR RATE
# FIG.4
*(PRIOR ART)*

MAGNETIC HEAD

$S_{RF}$

$D_{RF1}$

A / D

TRANSVERSAL FILTER CIRCUIT

DETECTION CHARACTERISTIC CORRECTING CIRCUIT

$D_{RF2}$

DECODING CIRCUIT

$D_{PB}$

CLOCK REPRODUCING CIRCUIT

$S_{CC}$

CLOCK PHASE CONTROLLING CIRCUIT

$S_{CK1}$

PLAYBACK SIGNAL PROCESSING CIRCUIT

**FIG.5**

$S_{RF1}$

SIGNAL LEVEL

ZERO LEVEL

T

$t_1$         $t_1$         $t_1$

TIME

PLAYBACK SIGNAL

**FIG.9**

CLOCK PHASE
CONTROLLING CIRCUIT

**FIG.6**

EP 0 415 108 B1

SIGNAL
LEVEL

$V_{REF1}$

$V_{REF2}$

ZERO LEVEL

$V_{REF3}$

$V_{REF4}$

$D_{RF2}$

t

DIGITAL PLAYBACK
SIGNAL

# FIG. 7

SIGNAL
LEVEL

$V_{REF1}$

$V_{REF2}$

ZERO LEVEL

$V_{REF3}$

$V_{REF4}$

$D_{RF2}$

t

DIGITAL PLAYBACK
SIGNAL

# FIG. 8

$S_{RF1}$

SIGNAL
LEVEL

$V_{REF5}$

ZERO
LEVEL

$V_{REF6}$

TIME

T

$t_1$

PLAYBACK SIGNAL

# FIG.10

ERROR RATE

$-\dfrac{\pi}{2}$          0          $\dfrac{\pi}{2}$     OFFSETTING OF
CLOCK PHASE

ERROR RATE

# FIG.11